# EUROPÄISCHE PATENTSCHRIFT

(11) **EP 3 432 767 B1**
(45) Veröffentlichungstag und Bekanntmachung des Hinweises auf die Patenterteilung: **08.04.2020**
(21) Anmeldenummer: 17711619.1
(22) Anmeldetag: 15.03.2017
(51) Int. Cl.: A47J 17/16, A47J 17/14

(54) **SCHÄLROTOR**
PEELING ROTOR
ROTOR DE PELAGE

(30) Priorität: 21.03.2016 CH 3902016
(43) Veröffentlichungstag der Anmeldung: 30.01.2019
(73) Patentinhaber: Groupe SEB Schweiz GmbH, 8152 Glattpark (Opfikon) (CH)
(72) Erfinder: HERREN, Bruno, 6375 Beckenried (CH)
(74) Vertreter: Rentsch Partner AG
(86) Internationale Anmeldenummer: PCT/EP2017/056057
(87) Internationale Veröffentlichungsnummer: WO 2017/162492

(56) Entgegenhaltungen:
- US-A- 3 654 976
- US-A- 3 848 524
- US-A- 5 996 483
- US-A1- 2002 153 440
- US-A1- 2005 044 716
- US-A1- 2008 301 952

## Beschreibung

### TECHNISCHES GEBIET

Die Erfindung betrifft einen Schälrotor zum Schälen von Knoblauch und ein Gerät zum Bearbeiten von Lebensmitteln.

### STAND DER TECHNIK

Aus dem Stand der Technik ist eine Vielzahl von Vorrichtungen bekannt um Knoblauchzehen zu schälen. Stellvertretend hierfür, soll die EP201 5660 B1 genannt werden. Dieses Dokument offenbart eine Arbeitseinheit zum Bearbeiten von Lebensmitteln umfassend mindestens zwei auf einer Arbeitsachse angeordnete und in Umfangsrichtung der Arbeitsachse wirkende Arbeitsmittel. Die Arbeitsmittel sind an einer Tragachse angeordnet und mindestens ein Arbeitsmittel ist relativ zu mindestens einem weiteren Arbeitsmittel innerhalb eines begrenzten Schwenkwinkels beweglich. Die Arbeitsmittel sind radial zur Arbeitsachse ausgerichtet. Für das Schälen von Zwiebeln und/oder Knoblauch werden fingerförmige Arbeitsmittel vorgeschlagen. Die offenbarte Arbeitseinheit kommt in einem Gerät zum Bearbeiten von Lebensmitteln zum Einsatz, welches einen Oberteil mit einer integrierten Antriebseinheit und ein Unterteil mit einem Arbeitsbehälter umfasst. Bevorzugt wird die Arbeitseinheit mit einer manuellen Antriebseinheit, beispielsweise einem Schnurzugsantrieb rotierend bewegt.

Die US 7264189 B2 offenbart ebenfalls ein mit einem Schnurzug betriebenes Gerät zum Bearbeiten von Lebensmitteln. In dieses Gerät kann neben einer Schneidklinge auch ein Schäler bestehend aus zwei aus Kunststoff gefertigten Armen eingesetzt werden, welcher durch den Schnurzug in eine rotierende Bewegung versetzt wird. Durch das Zusammenwirken der Schälarme mit einer Rippe im Inneren des Behälters, in welchen der Knoblauch zum Schälen eingelegt wird, und soll bei Rotation des Schälers die Aussenschale des Knoblauchs entfernt werden. Der in der US7264189 B2 offenbarte Knoblauchschäler liefert jedoch in der Praxis schlechte Resultate, die Schalen des Knoblauchs müssen vollständig durchgetrocknet sein und die Enden der Zehen müssen vorgängig abgeschnitten werden, um ein annähernd brauchbares Schälresultat zu erzielen. Frische Knoblauchzehen werden bei diesem Gerät oft verletzt. Der austretende Knoblauchsaft führt nicht nur zur Verschmutzung des Gerätes, sondern auch zum Anhaften von bereits entfernten Schalenstückchen an den verletzten Knoblauchzehen und an der Behälterwand. Des Weiteren ist das in der US7264189 B2 offenbarte Gerät relativ klein, da es in einer Hand gehalten und mit der anderen Hand der Schnurzug betätigt wird. Der offenbarte Schäler hat sich als ungeeignet für den Einsatz in grösseren Gefässen mit mehr Fassungsvolumen erwiesen.

### DARSTELLUNG DER ERFINDUNG

Aufgabe der vorliegenden Erfindung ist es, einen Schälrotor und ein Gerät zum Bearbeiten von Lebensmitteln zu entwickeln, welche die Nachteile des Standes der Technik vermeidet.

Diese Aufgabe wird durch einen Schälrotor gemäss Patentanspruch 1 und ein Gerät zum Bearbeiten von Lebensmitteln gemäss Patentanspruch 11 gelöst. Bevorzugte Ausführungsarten der Erfindung sind in den abhängigen Ansprüchen angegeben.

Unter dem Begriff des Schälens ist das Entfernen der äusseren Schale, respektive der äusseren Schalen von den einzelnen Knoblauchzehen oder Zwiebeln zu verstehen, nicht aber ein Zerkleinern oder Zerquetschen der Zehen oder Zwiebeln.

Der erfindungsgemässe Schälrotor für ein Gerät zum Bearbeiten von Lebensmitteln weist mindestens einen auf einer Tragachse angeordneten Schälarm (1, 2, 3, 4) auf, der ein Verbindungsstück und ein Endstück umfasst. Das Verbindungsstück verbindet mit einem ersten Ende den Schälarm mit der Tragachse. Am zweiten Ende des Verbindungsstücks schliesst das Endstück an, das aus einem ersten Elastomer gefertigt ist, das eine geringere Shore-Härte A aufweist als ein zweites Elastomer aus dem das Verbindungsstück gefertigt ist.

Die Materialkombination aus zwei unterschiedlichen Elastomeren hat sich als sehr vorteilhaft für den Schälrotor erwiesen. Zum einen ist es wichtig, dass der Schälarm des Rotors genügend steif ist um ausreichend Kraft auf das Schälgut auszuüben um die Haut von den Knoblauchzehen zu entfernen. Zum anderen ist ein flexibles elastisches Material vorzugsweise mit einer haftenden Oberfläche vorteilhaft um eine ausreichende Reibung zu erzielen und gleichzeitig ein schonendes Schälen zu ermöglichen.

Um den erfindungsgemässen Schälrotor auch für grössere Mengen an Schälgut einsetzen zu können, werden vorzugsweise zwei, drei oder vier Schälarme auf der Tragachse angeordnet.

Vorzugsweise sind der erste und zweite Schälarm einander gegenüberliegend, vorzugsweise im Winkel von 180° zueinander, an der Tragachse angeordnet. Die Schälarme stehen dabei bevorzugt senkrecht auf der Tragachse.

Beim Drehen der Rotoreinheit um eine von der Tragachse definierte vertikale Drehachse durchstreicht der radial abstehende Schälarm vorzugsweise eine horizontale Ebene. Der erste und der zweite Schälarm liegen vorzugsweise in derselben Ebene.

Weitere Schälarme, zum Beispiel ein dritter und ein vierter Schälarm sind vorzugsweise in einer zweiten Ebene über oder unter der ersten Ebene angeordnet.

In weiteren bevorzugten Ausführungsformen steht der Schälarm senkrecht auf der Tragachse und ist im der Tragachse abgewandten Endbereich aus der Geraden vorzugsweise nach unten abgebogen.

Im Betrieb ist ein solcher Schälrotor eingesetzt in einen Aufnahmebehälter eines Geräts zum Knoblauchschälen. Die nach unten gebogenen Schälarme können bis auf den Boden des Behälters reichen und dadurch die unten liegenden Knoblauchzehen optimal erreichen, bearbeiten und auch in den Arbeitsbereich höher liegender Schälarme schleudern.

Der dritte und vierte Schälarm liegen gemäss einer bevorzugten Ausführungsform wiederum einander gegenüber, vorzugsweise im Winkel von 180° zueinander, und sind derart an der Tragachse angeordnet, dass der erste und der zweite Schälarm jeweils um 90° versetzt zum dritten und vierten Schälarm radial von der Tragachse abstehen.

Mindestens ein Schälarm ist vorzugsweise drehfest an der Tragachse angeordnet. Weitere Schälarme können ebenfalls fix an der Tragachse angeordnet oder radial innerhalb eines begrenzten Schwenkwinkels relativ zu dem fix an der Tragachse befestigten Schälarm bewegbar ausgebildet sein.

Gemäss einer weiteren Ausführungsform des erfindungsgemässen Schälrotors verjüngt sich das Endstück zu dem von der Tragachse abgewandten freien Ende hin in der Breite.

Vorzugsweise nimmt die Breite um mehr als 50% ab. Das freie Ende ist vorzugsweise verrundet.

Wie im Folgenden noch eingehend erläutert wird, sind die Endstücke aus einem weichen Elastomermaterial gefertigt. Die Materialwahl in Kombination mit der vorgängig beschriebenen Gestaltung des freien Endes als dünne Schällippe ermöglicht die schonende Schälung der Knoblauchzehen.

Gemäss bevorzugter Ausführungsformen verjüngt sich das Endstück in der Breite von zum Beispiel 1 cm auf 0.25 cm, wobei die Höhe des Endstücks gleichbleibend bei 1 cm liegt.

Das Endstück ist vorzugsweise auf das Verbindungsstück aufgesteckt. Bedingt durch das Aufstecken wird das Endstück bis annähernd zum verjüngten freien Ende vom Verbindungsstück durchdrungen. Das Verbindungsstück ist bei dieser Ausführungsform ebenfalls verjüngt, respektive seitlich abgeflacht um die Formgebung des aufgesteckten Endstücks nicht zu beeinträchtigen.

Um das aufgesteckte Endstück am Verbindungsstück sicher zu halten sind Formschlussmittel vorgesehen. Zusätzlich oder alternativ werden beide Stücke verklebt und/oder miteinander verschweisst.

Gemäss weiterer bevorzugter Ausführungsformen ist das Endstück nicht aufgesteckt sondern das Verbindungsstück ist mit dem Endstück umspritzt.

Dieser Aufbau hat sich als vorteilhaft erwiesen. Die freien Enden bleiben flexibel und jene Teile der Endstücke die von den Verbindungsstücken durchdrungen werden, sind stabilisiert und weisen entsprechend eine höhere Steifigkeit auf. Die geringere Härte des verwendeten Elastomers für die Endstücke sowie dessen vorzugsweise haftenden Oberflächeneigenschaften bewirken dass die Schalen des Knoblauchs rückstandsfrei von der Zehe abgetrennt werden können ohne dass Zellen beschädigt werden und Knoblauchsaft austritt.

In einer bevorzugten Ausführungsform ragt das Verbindungsstück zu mindestens 50% seiner Gesamtlänge in das Endstück hinein.

Die Shore-Härte des Endstücks liegt zwischen Shore A 1 und Shore A 5. Besonders bevorzugt liegt die Shore-Härte bei Shore A 3. Die Shore-Härte des Verbindungsstücks liegt zwischen Shore A 60 und Shore A 90, bevorzugt zwischen Shore A 70 und Shore A 80, besonders bevorzugt bei Shore A 75. Gemessen werden die Shore A Härten nach DIN 53505.

Das Endstück ist aus einem Elastomer, vorzugsweise aus Flüssigkautschuk (LSR = Liquid Silicone Rubber) gefertigt. Das Verbindungsstück ist ebenfalls aus einem Elastomer, vorzugsweise aus Silikonkautschuk gefertigt.

Der erfindungsgemässe Schälrotor kommt zum Beispiel in einem Gerät zum Bearbeiten von Lebensmitteln zum Einsatz, wie es aus der WO 2007/128153 A1 bekannt ist.

Der Schälrotor wird dabei über eine Antriebseinheit, beispielsweise einen Schnurzugsantrieb, angeordnet im Deckel des Geräts, in eine rotierende Bewegung versetzt. In einer bevorzugten Ausführungsform verfügt der Behälter, insbesondere an seinen Wänden über eine Auskleidung aus einem Elastomer, vorzugsweise Silikonkautschuk. Bevorzugt weist das Elastomer für die Auskleidung die gleiche Shore-Härte A wie die Verbindungsstücke auf, vorzugsweise Shore-Härte A von 75. Die Behälterauskleidung ist gemäss einer bevorzugten Ausführungsform als Einsatz ausgebildet, der bei Bedarf in den Behälter eingesetzt und nach Gebrauch wieder aus diesem entfernt werden kann. Dazu ist die äussere Form des Einsatzes derart an die Innenkontur des Behälters angepasst, dass im Betrieb ein mitdrehen des Einsatzes mit der Rotoreinheit verhindert wird. Dies wird zum Beispiel durch nach innen vorstehende Verwirbelungsrippen der Behälterwand erreicht, die den Einsatz formschlüssig in radialer Richtung fixieren.

Durch die Kombination von Schälrotor und Behälterauskleidung wird das Schälresultat weiter verbessert, da die weiche Oberfläche der Auskleidung ein weiches Widerlager für die zu schälenden Knoblauchzehen mit guten Hafteigenschaften darstellt.

In einer weiteren Ausführungsform des Geräts zum Bearbeiten von Lebensmitteln ist die Länge des mindestens einen Schälarms zusammen mit dem Radius der Tragachse grösser als der Innendurchmesser des Behälters oder der inneren Auskleidung des Behälters. Dadurch wird erreicht, dass das freie Ende des Endstücks des Schälarms die Wände des Behälters oder die innere Auskleidung berührt und dabei elastisch verformt wird. Die oben bereits beschriebene Schällippe streicht während der Drehbewegung entlang der Behälterinnenwand oder entlang der Auskleidung. Kommt eine Knoblauchzehe zwischen die beiden relativ zueinander bewegten Oberflächen, so wird die Schale sehr effizient entfernt ohne dass die darunter zum Vorschein kommenden safthaltigen Zellen der Zehe beschädigt werden.

Vorzugsweise ist die Länge des mindestens einen Schälarms zusammen mit dem Radius der Tragachse um 0 bis 5%, vorzugsweise um 2%, grösser, als der Innendurchmesser des Behälters oder der inneren Auskleidung.

In einer weiteren Ausführungsform umfasst der erfindungsgemässe Schälrotor einen Freilaufmechanismus, wie er aus der WO 2014/016183 A1 bekannt ist.

In dieser Hinsicht wird Bezug genommen auf dieses publizierte Patentdokument. Ein solcher Schälrotor mit Freilaufmechanismus wird in eine, beispielsweise mittels des Schnurzugs rotierend angetriebene, Aufnahme eingesetzt. An dieser Aufnahme ist der Schälrotor mit einer Antriebsschnittstelle lösbar und drehmomentschlüssig befestigt. Der Schälrotor ist von der Antriebsschnittstelle in eine Arbeitsrichtung drehbeweglich antreibbar und durch den Freilauf bei Umkehrung der Drehrichtung der Antriebsschnittstelle von dieser in Bezug auf die Drehrichtung entkoppelbar.

### KURZE ERLÄUTERUNG ZU DEN FIGUREN

Die Erfindung soll nachfolgend anhand von Ausführungsbeispielen im Zusammenhang mit den Zeichnungen näher erläutert werden. Es zeigen:
- Fig. 1a: eine Schnittdarstellung durch zwei einander gegenüberliegende Schälarme;
- Fig. 1b: eine Ansicht von Oben auf die Schälarme gemäss Fig. 1a;
- Fig. 1c: eine Detailansicht auf eine Schällippe am Endstücks eines Schälarms;
- Fig. 2: eine Ausführungsform des erfindungsgemässen Schälrotors in einer Schnittdarstellung mit zwei Schälarmen, Tragachse und Freilauf;
- Fig. 3: eine weitere Ausführungsform des erfindungsgemässen Schälrotors mit vier Schälarmen in einer Ansicht von oben; und
- Fig. 4: eine Schnittdarstellung durch ein Gerät zum Bearbeiten von Lebensmitteln mit einem Schälrotor gemäss Fig. 2.

### WEGE ZUR AUSFÜHRUNG DER ERFINDUNG

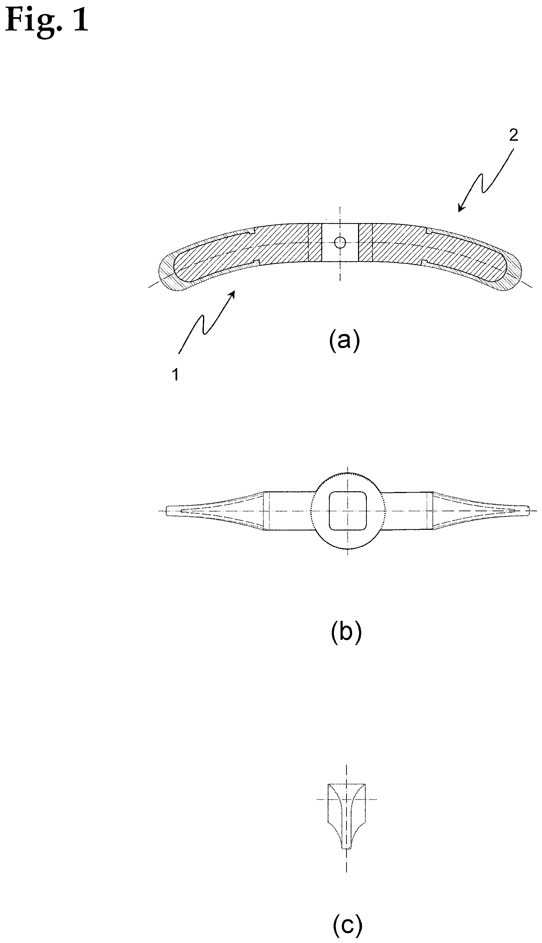

**Figur 1a** zeigt eine Schnittdarstellung durch zwei einander gegenüberliegende Schälarme 1, 2, die als einstückige Einheit zum formschlüssigen Anbringen an einer nicht dargestellten Tragachse ausgebildet sind.

In der Schnittdarstellung wird deutlich, dass der erste und der zweite Schälarm 1, 2 jeweils ein Verbindungsstück 11, 21 aufweisen, das an einem ersten Ende eine Aufsteckhülse zur Verbindung mit der Tragachse 30 aufweist. Am entgegengesetzten Ende ragen die beiden Verbindungsstücke jeweils in ein Endstück 12, 22. Die Endstücke 12, 22 sind auf die Verbindungsstücke 11, 21 aufgesteckt, so dass diese weit in die Endstücke hineinragen. Nur der letzte Abschnitt der freien Enden 122, 222 der Endstücke 12, 22 wird nicht von den Verbindungsstücken 3, 3' durchdrungen und bildet eine Schällippe mit hoher Flexibilität.

Die Verbindungsstücke 11, 21 und die Endstücke 12, 22 sind aus zwei verschiedenen Elastomeren gefertigt, wobei das Elastomer für die Verbindungstücke 11, 21 eine höhere Shore-Härte A als das Elastomer für die Endstücke aufweist. In der dargestellten Ausführungsform beträgt die Shore-Härte der Endstücke Shore A 3 und jene der Verbindungsstücke Shore A 75.

**Figur 1b** zeigt die Schälarme 1, 2 aus Figur 1a in einer Ansicht von oben. Die Endstücke 12, 22 sind zum freien Enden 122, 222 hin verjüngt und bilden die bereits oben angesprochene Schällippe aus, die nicht vom Verbindungsstück 11, 21 durchdrungen ist. Die Endbereiche der Verbindungsstücke 111, 211, die in die Endstücke 12, 22 ragen sind in der Ansicht von Oben strichliniert dargestellt. Es wird deutlich, dass sie sich analog zu den Endstücken 12, 22 verjüngen so dass deren Geometrie beim Aufstecken nicht wesentlich verändert wird.

**Figur 1c** zeigt in einer Detailansicht die am freien Ende des Endstücks ausgebildete Schällippe von schräg oben. Die Schällippe ist im dargestellten Beispiel etwa 0.25 cm breit und 1 cm hoch.

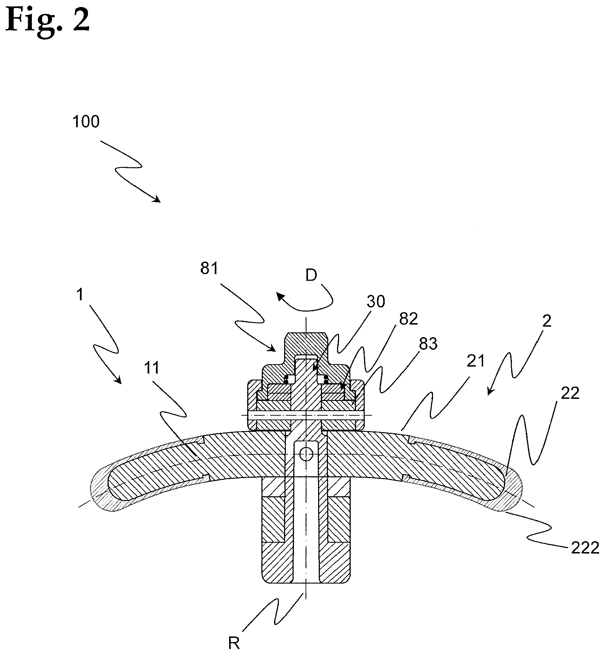

**Figur 2** zeigt den erfindungsgemässen Schälrotor 100 mit zwei Schälarmen 1, 2 wie sie in den Figuren 1a bis 1c dargestellt sind.

Der erfindungsgemässe Schälrotor 100 umfasst zwei Schälarme 1, 2 angeordnet an einer Tragachse 30. Der erste und der zweite Schälarm 1, 2 sind mittels je einem Verbindungsstück 11, 21 mit der Tragachse 30 verbunden. An jedes der beiden Verbindungsstücke 11, 21 schliesst ein Endstück 12, 22 an. Die Endstücke 12, 22 sind auf die Verbindungsstücke 11, 21 aufgesteckt so dass die Verbindungsstücke 11, 21 teilweise in die Endstücke 12, 22 hineinragen. An den freien Enden 122, 222 der Endstücke 12, 22 wird jeweils ein kurzer Bereich nicht von den Verbindungsstücken 11, 21 durchdrungen.

In der in Figur 2 dargestellten Ausführungsform umfasst der Schälrotor 100 einen Freilaufmechanismus wie er aus der WO2014/016183 A1 bekannt ist. Der Schälrotor 100 weist eine Antriebsschnittstelle mit einem Zapfen 81 auf, welcher formschlüssig an eine nicht in der Zeichnung dargestellte Schnittstelle eines Antriebs koppelbar ist. Der Freilauf 80 umfasst ein Kupplungsteil 82 und einen Mitnehmer 83. Bei einer Drehung D in Arbeitsrichtung wird der Zapfen 81 drehmomentschlüssig mit den Schälarmen 1, 2 gekoppelt. In diesem Betriebszustand drehen die Schälarme 1, 2 um die Rotationsachse R in Richtung D.

Wird der Zapfen 51 entgegen der Arbeitsrichtung D gedreht, so drehen die Schälarme 1, 2 nicht mit. Der Freilauf 80 entkoppelt die Drehbewegung des Zapfens 81 von der der Schälarme auf der Tragachse 30, so dass diese gebremst von anliegendem Schälgut in einer Ruheposition verharren und die Drehbewegung entgegen der Arbeitsrichtung D nicht mitmachen.

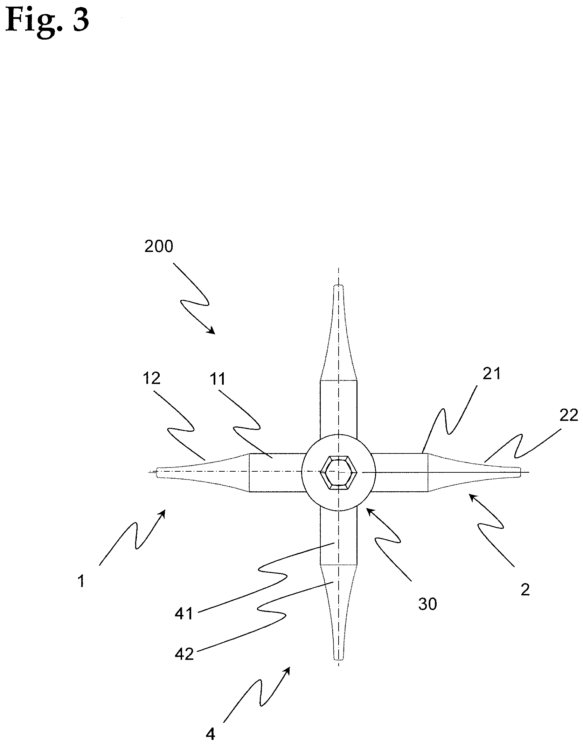

**Figur 3** zeigt eine weitere Ausführungsform des erfindungsgemässen Schälrotors 200 umfassend vier an der Tragachse 30 übereinander und im rechten Winkel zueinander angeordnete Schälarme 1, 2, 3, 4. Je zwei Schälarmen 1, 2 und 3, 4 sind in einer Ebene im 180° Winkel einander gegenüberliegend angeordnet.

Gemäss weiterer nicht in den Figuren dargestellter Ausführungsformen sind die Schälarme nicht im rechten Winkel zueinander angeordnet, sondern in abweichenden Winkelstellungen zueinander.

Jeder der in Figur 3 dargestellten Schälarme 1, 2, 3, 4 weist ein Verbindungsstück 11, 21, 31, 41 und je ein an diese Verbindungsstücke 11, 21, 31, 41 anschliessendes Endstück 12, 22, 32, 42 auf. Die Schälarme sind jeweils identisch aufgebaut und bereits zur Figur 1 beschrieben.

Bewegt werden die Schälarme 1, 2, 3 und 4 wie oben zur Figur 2 beschrieben. Im dargestellten Ausführungsbeispiel sind alle fix an der Tragachse angeordnet.

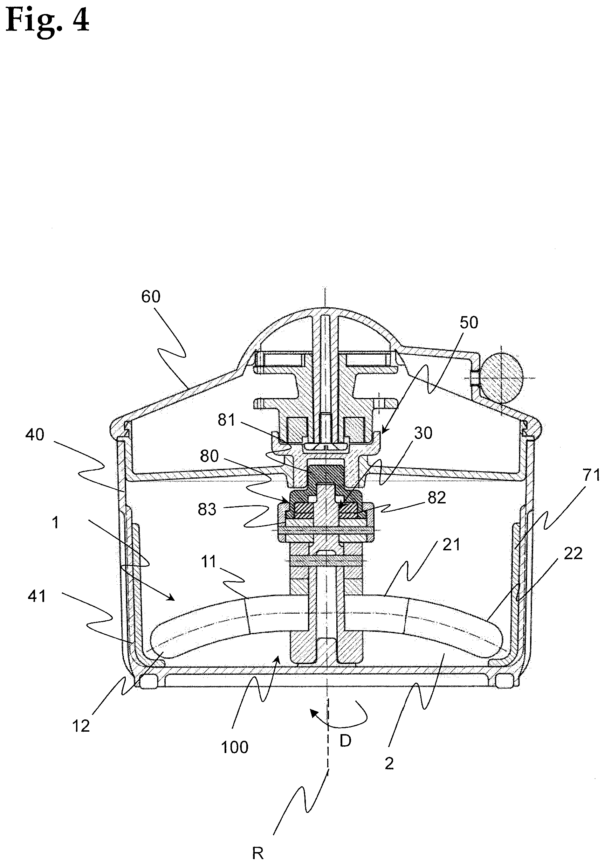

In **Figur 4** ist ein Gerät zum Bearbeiten von Lebensmitteln mit dem erfindungsgemässen Schälrotor 100 dargestellt. Der Schälrotor entspricht einem Rotor 100, wie er bereits in Fig. 2 dargestellt und oben beschrieben wurde. Der Antrieb 50 ist als Direktantrieb mit einem Schnurzug angeordnet im Deckel 60 realisiert und über einen Freilauf 80 mit der Tragachse 30 gekoppelt. In der in Figur 4 gezeigten Ausführungsform weist der Behälter 70 in welchem sich im Betrieb die zu schälenden Knoblauchzehen befinden (nicht dargestellt) eine Auskleidung 71 auf. Diese Auskleidung ist bevorzugt an den Wänden des Behälters 70 angeordnet und weist die gleiche Shore-Härte, wie die Verbindungsstücke 3, 3' auf, vorzugsweise Shore A von 75. Die Auskleidung ist im dargestellten Ausführungsbeispiel als herausnehmbarer Einsatz ausgebildet.

Dreht sich der Schälrotor 100 beim Betrieb um die Rotationsachse R in Richtung D, so werden die zu schälenden Knoblauchzehen nach aussen an die Auskleidung geschleudert, wo sie durch Reibung am weichen Elastomermaterial und nicht in der Zeichnung dargestellten Vertikalrippen abgebremst werden. Die Knoblauchzehen werden von den schneller drehenden Schälarmen zusätzlich an die Auskleidung gedrückt und beim Vorbeistreichen der freien Enden der Endstücke von ihrer Haut befreit.

Wird der Zapfen 81 entgegen der Arbeitsrichtung D gedreht, so drehen die Schälarme 1, 2 nicht mit. Der Freilauf 80 entkoppelt die Drehbewegung des Zapfens von den Schälarmen 1, 2 auf der Tragachse 30, so dass diese solange in einer Ruheposition verharren bis durch erneutes Ziehen am Schnurzug der Zapfen 81 wieder in Arbeitsrichtung D gedreht wird.

### LISTE DER BEZUGSZEICHEN

- 1: erster Schälarm
- 2: zweiter Schälarm
- 3: dritter Schälarm
- 4: vierter Schälarm
- 100, 200: Schälrotor
- 11, 21, 31, 41: Verbindungsstück
- 111, 211, 311, 411: Ende des Verbindungsstücks
- 12, 22, 32, 42: Endstück
- 121, 221, 321, 421: erstes Ende des Endstücks
- 122, 222, 322, 422: freies Ende des Endstücks
- 10: Gerät zum Bearbeiten von Lebensmitteln
- 30: Tragachse
- 50: Antriebseinheit
- 60: Oberteil, Deckel
- 70: Behälter
- 71: Behälterauskleidung
- 80: Freilauf
- 81: Zapfen
- D: Arbeitsrichtung
- R: Rotationsachse

## Patentansprüche

1. Schälrotor (100, 200), für ein Gerät zum Bearbeiten von Lebensmitteln, umfassend mindestens einen auf einer Tragachse (30) angeordneten Schälarm (1, 2, 3, 4) **dadurch gekennzeichnet, dass** der Schälarm (1, 2, 3, 4) ein Verbindungsstück (11, 21, 31, 41) und ein Endstück (12, 22, 32, 42) umfasst, wobei das Verbindungsstück (11) mit einem ersten Ende den Schälarm (1, 2, 3, 4) mit der Tragachse (30) verbindet und das Endstück (12, 22, 32, 42) am zweiten Ende des Verbindungsstücks (11, 21, 31, 41) anschliesst, wobei das Endstück (12, 22, 32, 42) aus einem ersten Elastomer gefertigt ist, das eine geringere Shore-Härte A aufweist als ein zweites Elastomer aus dem das Verbindungsstück (11, 21, 31, 41) gefertigt ist.

2. Schälrotor (100, 200) nach Anspruch 1, **dadurch gekennzeichnet, dass** er einen zweiten (2), dritten (3) und/oder vierten (4) Schälarm aufweist.

3. Schälrotor (100, 200) nach Anspruch 2, **dadurch gekennzeichnet, dass** der erste und zweite Schälarm (1, 2) einander gegenüberliegend, vorzugsweise im Winkel von 180° zueinander, an der Tragachse (30) angeordnet sind.

4. Schälrotor (200) nach Anspruch 2 oder 3, **dadurch gekennzeichnet, dass** der dritte und vierte Schälarm (3, 4) einander gegenüberliegend, vorzugsweise im Winkel von 180° zueinander, an der Tragachse (30) angeordnet sind, wobei der erste und der zweite Schälarm (1, 2) vorzugsweise jeweils um 90° versetzt zum dritten und vierten Schälarm (3, 4) angeordnet sind.

5. Schälrotor (200) nach Anspruch 4, **dadurch gekennzeichnet, dass** mindestens ein Schälarm innerhalb eines begrenzten Schwenkwinkels relativ zu mindestens einem weiteren Schälarm um die Tragachse (30) schwenkbar ist.

6. Schälrotor (100, 200) nach einem der vorangegangenen Ansprüche, **dadurch gekennzeichnet, dass** das mindestens eine Endstück (12, 22, 32, 42) des mindestens einen Schälarms (1, 2, 3, 4) sich an einem von der Tragachse (30) abgewandten freien Ende (122, 222, 322, 422) in der Breite verjüngt, wobei die Breite um mehr als 50% abnimmt und das freie Ende vorzugsweise verrundet ist.

7. Schälrotor (100, 200) nach einem der Ansprüche 1 bis 6, **dadurch gekennzeichnet, dass** das mindestens eine Endstück (12, 22, 32, 42) derart ausgebildet ist, dass es an einem ersten Ende (121, 221, 321, 421) auf das jeweilige Verbindungsstück (11, 21, 31, 41) aufsteckbar ist und das mindestens eine Verbindungsstück (11, 21, 31, 41) mit einem der Tragachse abgewandten Ende (111, 211, 311, 411) in das jeweilige Endstück (12, 22, 32, 42) hineinragt.

8. Schälrotor (100) nach Anspruch 7, **dadurch gekennzeichnet, dass** das Verbindungsstück (11, 21, 31, 41) zu mindestens 50% seiner Gesamtlänge in das Endstück (12, 22, 32, 42) hineinragt.

9. Schälrotor (100, 200) nach einem der vorangegangenen Ansprüche, **dadurch gekennzeichnet, dass** die Shore-Härte des Endstücks (12, 22, 32, 42) zwischen Shore A 1 und Shore A 5, besonders bevorzugt bei 3 und die Shore-Härte des Verbindungsstücks (11, 21, 31, 41) zwischen Shore A 60 und Shore A 90, bevorzugt zwischen Shore A 70 und Shore A 80 und besonders bevorzugt bei Shore A 75 liegt.

10. Schälrotor (100, 200) nach einem der vorangegangenen Ansprüche, **dadurch gekennzeichnet, dass** das Endstück (12, 22, 32, 42) aus einem Elastomer, vorzugsweise aus Flüssigkautschuk (LSR = Liquid Silicone Rubber) und das Verbindungsstück (11,21, 31, 41) aus einem Elastomer, vorzugsweise aus Silikonelastomer oder aus Silikonkautschuk gefertigt ist.

11. Schälrotor (100, 200) nach einem der vorangegangenen Ansprüche, **dadurch gekennzeichnet, dass** der mindestens eine Schälarm (1, 2, 3, 4) senkrecht auf der Tragachse (30) steht und im der Tragachse abgewandten Endbereich vorzugsweise nach unten abgebogen.

12. Gerät (10) zum Bearbeiten von Lebensmitteln mit einem Oberteil (60), einer Antriebseinheit (50), einem Behälter (70) und einem mittels einer Antriebseinheit (50) antreibbaren Schälrotor (100, 200) gemäss einem der Ansprüche 1 bis 11, **dadurch gekennzeichnet, dass** der Behälter (70) eine innere Auskleidung (71) aus einem Elastomer, vorzugsweise aus Silikonelastomer oder aus Silikonkautschuk, aufweist, wobei die innere Auskleidung (71) vorzugsweise herausnehmbar im Behälter (70) angeordnet ist.

13. Gerät (10) zum Bearbeiten von Lebensmittel nach Anspruch 12, **dadurch gekennzeichnet, dass** das Elastomer für die Auskleidung (71) die gleiche Shore-Härte A aufweist wie das Verbindungsstück (11, 21, 31, 41), vorzugsweise Shore-Härte A von 75.

14. Gerät (10) zum Bearbeiten von Lebensmitteln nach einem der Ansprüche 12 bis 13, **dadurch gekennzeichnet, dass** die Länge des mindestens einen Schälarms (1, 2, 3, 4) zusammen mit dem Radius der Tragachse (30) grösser ist, als der Innendurchmesser des Behälters (70) oder des Behälters (70) mit der inneren Auskleidung (71), so dass das freie Ende (122, 222, 322, 422) des Endstücks (12, 22, 32, 42) des Schälarms (1, 2, 3, 4) die Wände des Behälters (40) oder die innere Auskleidung (71) berühren und dabei elastisch verformt werden.

15. Gerät zum Bearbeiten von Lebensmitteln nach Anspruch 13, **dadurch gekennzeichnet, dass** die Länge des mindestens einen Schälarms (1, 2, 3, 4) zusammen mit dem Radius der Tragachse (30) um 0 bis 5%, vorzugsweise um 3%, grösser ist, als der Innendurchmesser des Behälters (70) oder des Behälters (70) mit der inneren Auskleidung (71).

## Claims

1. Peeling rotor (100, 200) for a device for processing foodstuffs comprising at least one peeling arm (1, 2, 3, 4) which is arranged on a carrier shaft (30), **characterised in that** the peeling arm (1, 2, 3, 4) comprises a connection piece (11, 21, 31, 41) and an end piece (12, 22, 32, 42), wherein the connection piece (11) connects with a first end the peeling arm (1, 2, 3, 4) to the carrier shaft (30) and the end piece (12, 22, 32, 42) adjoins the second end of the connection piece (11, 21, 31, 41), wherein the end piece (12, 22, 32, 42) is produced from a first elastomer material which has a lower Shore hardness A than a second elastomer material from which the connection piece (11, 21, 31, 41) is produced.

2. Peeling rotor (100, 200) according to Claim 1, **characterised in that** it has a second peeling arm (2), third peeling arm (3) and/or fourth peeling arm (4).

3. Peeling rotor (100, 200) according to Claim 2, **characterised in that** the first and second peeling arms (1, 2) are arranged facing each other, preferably at an angle of 180° with respect to each other, on the carrier shaft (30).

4. Peeling rotor (200) according to Claim 2 or 3, **characterised in that** the third and fourth peeling arms (3, 4) are arranged facing each other, preferably at an angle of 180° with respect to each other, on the carrier shaft (30), wherein the first and second peeling arms (1, 2) are preferably arranged offset in each case through 90° with respect to the third and fourth peeling arms (3, 4).

5. Peeling rotor (200) according to Claim 4, **characterised in that** at least one peeling arm can be pivoted within a limited pivot angle relative to at least one additional peeling arm about the carrier shaft (30).

6. Peeling rotor (100, 200) according to any one of the preceding claims, **characterised in that** the at least one end piece (12, 22, 32, 42) of the at least one peeling arm (1, 2, 3, 4) tapers in terms of width at a free end (122, 222, 322, 422) facing away from the carrier shaft (30), wherein the width decreases by more than 50% and the free end is preferably rounded.

7. Peeling rotor (100, 200) according to any one of Claims 1 to 6, **characterised in that** the at least one end piece (12, 22, 32, 42) is constructed in such a manner it can be attached to a first end (121, 221, 321, 421) to the respective connection piece (11, 21, 31, 41) and the at least one connection piece (11, 21, 31, 41) protrudes with an end (111, 211, 311, 411) facing away from the carrier shaft into the respective end piece (12, 22, 32, 42).

8. Peeling rotor (100) according to Claim 7, **characterised in that** the connection piece (11, 21, 31, 41) protrudes by at least 50% of the total length thereof into the end piece (12, 22, 32, 42).

9. Peeling rotor (100, 200) according to any one of the preceding claims, **characterised in that** the Shore hardness of the end piece (12, 22, 32, 42) is between Shore A1 and Shore A5, in a particularly preferred manner is 3 and the Shore hardness of the connection piece (11, 21, 31, 41) is between Shore A60 and Shore A90, preferably between Shore A70 and Shore A80 and in a particularly preferred manner is Shore A75.

10. Peeling rotor (100, 200) according to any one of the preceding claims, **characterised in that** the end piece (12, 22, 32, 42) is produced from an elastomer material, preferably from liquid rubber (LSR = Liquid Silicone Rubber) and the connection piece (11, 21, 31, 41) is produced from an elastomer material, preferably from silicone elastomer or from silicone rubber.

11. Peeling rotor (100, 200) according to any one of the preceding claims, **characterised in that** the at least one peeling arm (1, 2, 3, 4) is located perpendicularly on the carrier shaft (30) and is preferably bent away downwards in the end region facing away from the carrier shaft.

12. Device (10) for processing foodstuffs having an upper portion (60), a drive unit (50), a container (70) and a peeling rotor (100, 200) which can be driven by means of a drive unit (50) according to any one of Claims 1 to 11, **characterised in that** the container (70) has an inner lining (71) of an elastomer material, preferably silicone elastomer material or silicone rubber, wherein the inner lining (71) is preferably arranged in the container (70) so as to be able to be removed.

13. Device (10) for processing foodstuffs according to Claim 12, **characterised in that** the elastomer material for the lining (71) has the same Shore hardness A as the connection piece (11, 21, 31, 41), preferably a Shore hardness A of 75.

14. Device (10) for processing foodstuffs according to any one of Claims 12 to 13, **characterised in that** the length of the at least one peeling arm (1, 2, 3, 4) together with the radius of the carrier shaft (30) is greater than the inner diameter of the container (70) or the container (70) with the inner lining (71) so that the free end (122, 222, 322, 422) of the end piece (12, 22, 32, 42) of the peeling arm (1, 2, 3, 4) touches the walls of the container (40) or the inner lining (71) and in this instance is resiliently deformed.

15. Device for processing foodstuffs according to Claim 13, **characterised in that** the length of the at least one peeling arm (1, 2, 3, 4) together with the radius of the carrier shaft (30) is from 0 to 5% greater, preferably 3% greater, than the inner diameter of the container (70) or the container (70) with the inner lining (71).

## Revendications

1. Rotor de pelage (100, 200) pour un appareil pour traiter des aliments, comprenant au moins un bras de pelage (1, 2, 3, 4) disposé sur un axe de support (30), **caractérisé en ce que** le bras de pelage (1, 2, 3, 4) comprend une pièce de connexion (11, 21, 31, 41) et une pièce de bout (12, 22, 32, 42), la pièce de connexion (11) reliant par une première extrémité le bras de pelage (1, 2, 3, 4) à l'axe de support (30) et la pièce de bout (12, 22, 32, 42) se raccordant à la deuxième extrémité de la pièce de connexion (11, 21, 31, 41), la pièce de bout (12, 22, 32, 42) étant fabriquée en un premier élastomère qui présente une plus faible dureté Shore A qu'un deuxième élastomère dans lequel est fabriquée la pièce de connexion (11, 21, 31, 41).

2. Rotor de pelage (100, 200) selon la revendication 1, **caractérisé en ce qu'**il présente un deuxième (2), un troisième (3) et/ou un quatrième (4) bras de pelage.

3. Rotor de pelage (100, 200) selon la revendication 2, **caractérisé en ce que** le premier et le deuxième bras de pelage (1, 2) sont disposés à l'opposé l'un de l'autre, de préférence suivant un angle de 180° l'un par rapport à l'autre, sur l'axe de support (30).

4. Rotor de pelage (200) selon la revendication 2 ou 3, **caractérisé en ce que** le troisième et le quatrième bras de pelage (3, 4) sont disposés à l'opposé l'un de l'autre, de préférence suivant un angle de 180° l'un par rapport à l'autre, sur l'axe de support (30), le premier et le deuxième bras de pelage (1, 2) étant de préférence disposés à chaque fois de manière décalée de 90° par rapport au troisième et au quatrième bras de pelage (3, 4).

5. Rotor de pelage (200) selon la revendication 4, **caractérisé en ce qu'**au moins un bras de pelage peut pivoter autour de l'axe de support (30) à l'intérieur d'un angle de pivotement limité par rapport à au moins un bras de pelage supplémentaire.

6. Rotor de pelage (100, 200) selon l'une quelconque des revendications précédentes, **caractérisé en ce que** l'au moins une pièce de bout (12, 22, 32, 42) de l'au moins un bras de pelage (1, 2, 3, 4) se rétrécit en largeur au niveau d'une extrémité libre (122, 222, 322, 422) opposée à l'axe de support (30), la largeur diminuant de plus de 50 % et l'extrémité libre étant de préférence arrondie.

7. Rotor de pelage (100, 200) selon l'une quelconque des revendications 1 à 6, **caractérisé en ce que** l'au moins une pièce de bout (12, 22, 32, 42) est réalisée de telle sorte qu'elle puisse être enfichée au niveau d'une première extrémité (121, 221, 321, 421) sur la pièce de connexion respective (11, 21, 31, 41) et l'au moins une pièce de connexion (11, 21, 31, 41) pénètre avec une extrémité (111, 211, 311, 411) opposée à l'axe de support dans la pièce de bout respective (12, 22, 32, 42).

8. Rotor de pelage (100) selon la revendication 7, **caractérisé en ce que** la pièce de connexion (11, 21, 31, 41) pénètre sur au moins 50 % de sa longueur totale dans la pièce de bout (12, 22, 32, 42).

9. Rotor de pelage (100, 200) selon l'une quelconque des revendications précédentes, **caractérisé en ce que** la dureté Shore de la pièce de bout (12, 22, 32, 42) est comprise entre Shore A 1 et Shore A 5, particulièrement préférablement vaut 3, et la dureté Shore de la pièce de connexion (11, 21, 31, 41) est comprise entre Shore A 60 et Shore A 90, de préférence entre Shore A 70 et Shore A 80 et particulièrement préférablement vaut Shore A 75.

10. Rotor de pelage (100, 200) selon l'une quelconque des revendications précédentes, **caractérisé en ce que** la pièce de bout (12, 22, 32, 42) est fabriquée en élastomère, de préférence en caoutchouc liquide (LSR = Liquid Silicone Rubber) et la pièce de connexion (11, 21, 31, 41) est fabriquée en élastomère, de préférence en élastomère de silicone ou en caoutchouc de silicone.

11. Rotor de pelage (100, 200) selon l'une quelconque des revendications précédentes, **caractérisé en ce que** l'au moins un bras de pelage (1, 2, 3, 4) est perpendiculaire à l'axe de support (30) et est recourbé de préférence vers le bas dans la région d'extrémité opposée à l'axe de support.

12. Appareil (10) pour traiter des aliments, comprenant une partie supérieure (60), une unité d'entraînement (50), un récipient (70) et un rotor de pelage (100, 200) selon l'une quelconque des revendications 1 à 11 pouvant être entraîné au moyen d'une unité d'entraînement (50), **caractérisé en ce que** le récipient (70) présente un habillage intérieur (71) en élastomère, en particulier en élastomère de silicone ou en caoutchouc de silicone, l'habillage intérieur (71) étant de préférence disposé dans le récipient (70) de manière à pouvoir être ressorti.

13. Appareil (10) pour traiter des aliments selon la revendication 12, **caractérisé en ce que** l'élastomère pour l'habillage (71) présente la même dureté Shore A que la pièce de connexion (11, 21, 31, 41), de préférence une dureté Shore A de 75.

14. Appareil (10) pour traiter des aliments selon l'une quelconque des revendications 12 et 13, **caractérisé en ce que** la longueur de l'au moins un bras de pelage (1, 2, 3, 4) conjointement avec le rayon de l'axe de support (30) est supérieure au diamètre intérieur du récipient (70) ou du récipient (70) avec l'habillage intérieur (71), de sorte que l'extrémité libre (122, 222, 322, 422) de la pièce de bout (12, 22, 32, 42) du bras de pelage (1, 2, 3, 4) vienne en contact avec les parois du récipient (40) ou avec l'habillage intérieur (71) et soit en l'occurrence déformées élastiquement.

15. Appareil pour traiter des aliments selon la revendication 13, **caractérisé en ce que** la longueur de l'au moins un bras de pelage (1, 2, 3, 4) conjointement avec le rayon de l'axe de support (30) est supérieure de 0 à 5 %, de préférence de 3 %, au diamètre intérieur du récipient (70) ou du récipient (70) avec l'habillage intérieur (71).
